# EUROPEAN PATENT APPLICATION

(11) **EP 3 382 679 A1**
(43) Date of publication of application: **03.10.2018**
(21) Application number: 17193087.8
(22) Date of filing: 26.09.2017
(51) Int. Cl.: G09F 3/00, G09F 3/10, G09F 3/02

(54) **MEDIUM AND TAPE CARTRIDGE**

(30) Priority: 31.03.2017 JP 2017073182
(71) Applicant: BROTHER KOGYO KABUSHIKI KAISHA, Nagoya-shi, Aichi-ken 467-8561 (JP)
(72) Inventor: INOUE, Harumitsu, Nagoya-shi, Aichi-ken, 467-8562 (JP); TAKAMI, Yukiko, Nagoya-shi, Aichi-ken, 467-8562 (JP); KATO, Tsutomu, Nagoya-shi, Aichi-ken, 467-8562 (JP); BANNO, Takaaki, Nagoya-shi, Aichi-ken, 467-8562 (JP); MATSUMOTO, Haruki, Nagoya-shi, Aichi-ken, 467-8562 (JP); MURAYAMA, Kentaro, Nagoya-shi, Aichi-ken, 467-8562 (JP); SATO, Yukihiko, Nagoya-shi, Aichi-ken, 467-8562 (JP)
(74) Representative: Kuhnen & Wacker Patent- und Rechtsanwaltsbüro PartG mbB

(57) **Abstract**

A medium (To) includes a base layer (21) and a separation layer (24) stacked on each other. A plurality of regions are defined along a first direction. The plurality of regions include: a first region (D1) in which a portion of the medium (To) which is in contact with the separation layer (24) is stickable; a second region (D2) in which a portion of the medium (To) which is in contact with the separation layer (24) is non-stickable; a third region (D3) in which a printing background layer (25) is provided and in which a portion of the medium (To) which is in contact with the separation layer (24) is non-stickable; and a fourth region (D4) in which a portion of the medium (To) which is in contact with the separation layer (24) is at least partly stickable. A length of the second region (D2) in the first direction is less than a length of the fourth region (D4) in the first direction, and a length of the first region (D1) in the first direction is less than or equal to the length of the second region (D2) in the first direction in at least one position in a second direction.

## Description

### BACKGROUND

The following disclosure relates to a medium to be attached to a wrapped member and to a tape cartridge accommodating the medium.

Patent Document 1 (JP-T-2011-524154) discloses a medium to be attached to an outer circumferential portion of a cable or a circular cylindrical wrapped member, for example. This medium includes a base layer, an adhesive layer, and a separation layer stacked on each other. The medium includes: a one-side adhesive region in which a back surface of the medium becomes adhesive after the separation layer is peeled off; a non-adhesive region which is contiguous to the one-side adhesive region and in which a printing background layer is provided, and the back surface of the medium is not stickable; and an other-side adhesive region which is contiguous to the non-adhesive region and in which the back surface of the medium is partly adhesive.

### SUMMARY

In this conventional medium, the back surface (i.e., an inner circumferential surface) of the portion of the medium in the one-side adhesive region is first stuck to the outer circumferential portion of the wrapped member with adhesive. The portion of the medium in the non-adhesive region contiguous to the one-side adhesive region is then wrapped around the wrapped member so as to form a cylindrical member. The back surface (i.e., the inner circumferential surface) of the portion of the medium in the other-side adhesive region is then stuck to an outer circumferential surface of the portion of the medium in the non-adhesive region with adhesive. A user then breaks the medium along perforation formed in advance between the one-side adhesive region and the non-adhesive region in a state in which the portions of the medium in the one-side adhesive region and the non-adhesive region adhere to the wrapped member. As a result, a unit of the portions of the medium in the non-adhesive region and the other-side adhesive region is separated from the portion of the medium in the one-side adhesive region, whereby the cylindrical medium rotatable around the wrapped member (i.e., a rotational label) is completed.

The above-described technique however requires the user to break the medium along the perforation. This breakage may produce an additional force such as a twisting of the wrapped member, which may unfortunately affect durability of the medium and the wrapped member.

Accordingly, an aspect of the disclosure relates to a medium attachable rotatably around a wrapped member without additional force and to a tape cartridge accommodating the medium.

In one aspect of the disclosure, a medium includes a transparent base layer and a separation layer stacked on each other in a stacking direction. A plurality of regions are defined in the medium along a first direction orthogonal to the stacking direction. The plurality of regions include: a first region in which a portion of the medium which is in contact with the separation layer is stickable; a second region which is located on one side of the first region in the first direction and in which a portion of the medium which is in contact with the separation layer is non-stickable; a third region which is located on the one side of the second region in the first direction, in which a printing background layer is provided, and in which a portion of the medium which is in contact with the separation layer is non-stickable; and a fourth region which is located on the one side of the third region in the first direction and in which a portion of the medium which is in contact with the separation layer is at least partly stickable. A length of the second region in the first direction is less than a length of the fourth region in the first direction, and a length of the first region in the first direction is less than or equal to the length of the second region in the first direction in at least one position in a second direction orthogonal to each of the stacking direction and the first direction.

In another aspect of the disclosure, a tape cartridge includes: a housing; and a tape roll that is a roll of a tape contained in the housing and including a transparent base layer and a separation layer stacked on each other in a stacking direction. A plurality of regions are defined in the tape along a first direction orthogonal to the stacking direction. The plurality of regions include: a first region in which a portion of the tape which is in contact with the separation layer is stickable; a second region which is located on one side of the first region in the first direction and in which a portion of the tape which is in contact with the separation layer is non-stickable; a third region which is located on the one side of the second region in the first direction, in which a printing background layer is provided, and in which a portion of the tape which is in contact with the separation layer is non-stickable; and a fourth region which is located on the one side of the third region in the first direction and in which a portion of the tape which is in contact with the separation layer is at least partly stickable. A length of the second region in the first direction is less than a length of the fourth region in the first direction, and a length of the first region in the first direction is less than or equal to the length of the second region in the first direction in at least one position in a second direction orthogonal to each of the stacking direction and the first direction.

In still another aspect of the disclosure, a medium includes a transparent base layer and a separation layer stacked on each other in a stacking direction. A plurality of regions are defined in the medium along a first direction orthogonal to the stacking direction. The plurality of regions include: a first region in which a portion of the medium which is in contact with the separation layer is stickable; a second region which is located on one side of the first region in the first direction and in which a portion of the medium which is in contact with the separation layer is non-stickable; a third region which is located on the one side of the second region in the first direction, in which a printing background layer is provided, and in which a portion of the medium which is in contact with the separation layer is non-stickable; and a fourth region which is located on the one side of the third region in the first direction and in which a portion of the medium which is in contact with the separation layer is at least partly stickable. The fourth region includes: a first-portion region which is non-stickable and which is contiguous to the third region on the one side of the third region in the first direction; and a second-portion region at least a portion of which is stickable and which is contiguous to the first-portion region on the one side of the first-portion region in the first direction. A length of the first region in the first direction is equal to a length of the first-portion region in the first direction in at least one position in a second direction orthogonal to each of the stacking direction and the first direction.

In still another aspect of the disclosure, a medium includes a transparent base layer and a separation layer stacked on each other in a stacking direction. A plurality of regions are defined in the medium along a first direction orthogonal to the stacking direction. The plurality of regions include: a first region in which a portion of the medium which is in contact with the separation layer is stickable; a second region which is located on one side of the first region in the first direction and in which a portion of the medium which is in contact with the separation layer is non-stickable; a third region which is located on the one side of the second region in the first direction, in which a printing background layer is provided, and in which a portion of the medium which is in contact with the separation layer is non-stickable; and a fourth region which is located on the one side of the third region in the first direction and in which a portion of the medium which is in contact with the separation layer is at least partly stickable. A cross-sectional shape of an entirety of the transparent base layer in a thickness direction thereof is continuous in the first direction.

In still another aspect of the disclosure, a medium including a transparent base layer and a separation layer stacked on each other in a stacking direction. A plurality of regions are defined in the medium along a first direction orthogonal to the stacking direction. The plurality of regions include: a fifth region in which a portion of the medium which is in contact with the separation layer is stickable; a sixth region which is located on one side of the fifth region in the first direction and in which a portion of the medium which is in contact with the separation layer is non-stickable; a seventh region which is located on the one side of the sixth region in the first direction and in which a portion of the medium which is in contact with the separation layer is non-stickable; and an eighth region which is located on the one side of the seventh region in the first direction and in which a portion of the medium which is in contact with the separation layer is at least partly stickable. A cross-sectional shape of an entirety of the transparent base layer in a thickness direction thereof is continuous in the first direction.

The medium described above is wrapped around a cable or a circular cylindrical wrapped member without adhesive therebetween. That is, in attachment of the medium, after the separation layer is peeled off, the portions of the medium in the first, second, and third regions among the first through fourth regions arranged in this order in the first direction are bent in a concave shape such that a portion of the medium which had been in contact with the separation layer is located on an inner side. The medium is wrapped around the wrapped member so as to form a cylindrical member surrounding the wrapped member. Then, an adhesive portion of the medium in the first region as a distal end portion of the medium is stuck to a portion of the medium in a portion (a first-portion region) of the fourth region which is nearer to the third region. As a result, the shape of the medium is fixed by the sticking, and the medium is wrapped around the wrapped member in the second region and the third region without adhesive, whereby the medium is rotatably attached to the wrapped member.

Thereafter, the rest portion of the fourth region which is not used for surrounding the wrapped member is wrapped around an outer circumferential portion of the medium so as to cover the portions of the medium in the second region and the third region (which constitute the cylindrical member) in this order such that the stuck portions of the medium in the first region and the first-portion region are folded into an inner circumferential side. The portion of the medium in the fourth region is stuck to the medium using adhesiveness of the portion of the medium in the fourth region, and the attachment of the medium to the wrapped member is finished.

During wrapping of the portion of the medium in the fourth region, the portions of the medium in the second region and the third region are covered with the portion of the medium in the fourth region in this order. In the present medium, as described above, the length of the fourth region is greater than the length of the second region. Thus, at least a portion of the third region contiguous to the second region can be covered with the fourth region. The printing background layer is provided in at least a portion of the third region, and an object such as a text is described on the printing background layer when a user uses the medium. Accordingly, the above-described structure enables the portion of the medium in the fourth region to cover at least a portion of the object formed on the portion of the medium in the third region, thereby reducing lowering of viewability of the object due to soiling, for example.

While the portion of the medium in the fourth region is being wrapped on the portions of the medium in the second region and the third region, the inner portion of the medium in the fourth region and the portion (including the first region) of the medium which is stuck to the inner portion are wrapped on the outer circumferential portions of the medium in the second region and the third region in this order. In the present medium, since the length of the first region is less than or equal to the second region, it is possible to prevent the portion of the medium in the first region from covering not only the portion of the medium in the second region but also the portion of the medium in the third region. Accordingly, it is possible to further reduce the lowering of viewability of the object in the third region.

The medium as described above is attached to the wrapped member by sticking the portion of medium in the first region and the portion of the medium in the first-portion region to each other to form the cylindrical member around the wrapped member. Thus, an additional force such as a twisting of the wrapped member is not applied to the medium and the wrapped member as in the conventional structure in which the medium is wrapped around the wrapped member and cut along perforation. Furthermore, even after the medium is attached to the wrapped member, it is possible to ensure good viewability of a character or the like on a portion of the printing background layer in the third region.

In the medium, a sum of the length of the second region in the first direction and a length of the third region in the first direction is less than or equal to the length of the fourth region in the first direction.

In the medium, the length of the fourth region in the first direction is greater than or equal to a sum of the length of the second region in the first direction and a length of the third region in the first direction and less than or equal to a sum of the length of the third region in the first direction and twice the length of the second region in the first direction.

In the medium, the fourth region includes: a first-portion region which is non-stickable and which is contiguous to the third region on the one side of the third region in the first direction; and a second-portion region at least a portion of which is stickable and which is contiguous to the first-portion region on the one side of the first-portion region in the first direction.

In the medium, the length of the first region in the first direction is equal to a length of the first-portion region in the first direction.

In the medium, a portion of the transparent base layer in the first region includes a first mark. A portion of the transparent base layer in the first-portion region includes a second mark. The first mark and the second mark are aligned with each other in the first direction.

In the medium, a portion of the medium in the first region includes an end portion of the medium in the first direction.

The medium further includes an adhesive layer disposed in at least a portion of an area located between the transparent base layer and the separation layer.

The medium further includes an adhesive layer disposed in at least a portion of an area located between the transparent base layer and the separation layer. A non-adhesive layer is provided between the adhesive layer and the separation layer in at least one of the second region, the third region, and the fourth region.

In the medium, a portion of the transparent base layer in a portion of the fourth region has stickability provided by the adhesive layer. A release treatment is applied to a surface of a portion of the separation layer in the portion of the fourth region.

In the medium, a release treatment is applied at least to a surface of a portion of the separation layer in the first region.

In the medium, a release treatment is applied at least to a surface of a portion of the transparent base layer in the first region.

In the medium, the printing background layer is provided on a one-side surface of the transparent base layer in a thickness direction of the transparent base layer. The adhesive layer is provided on an other-side surface of the transparent base layer in the thickness direction.

In the medium, the printing background layer is an ink coated layer on the transparent base layer.

In the medium, a cross-sectional shape of an entirety of the transparent base layer in a thickness direction thereof is continuous in the first direction.

In the medium, the medium is elongated in the second direction.

In the medium, a length of the fourth region in the first direction is greater than the length of the first region in the first direction, and a length of the second region in the first direction is greater than or equal to the length of the fourth region in the first direction in the at least one position in the second direction.

In the medium, a length of the fourth region in the first direction is greater than a length of the first region in the first direction, and a length of the second region in the first direction is greater than or equal to the length of the fourth region in the first direction in at least one position in a second direction orthogonal to each of the stacking direction and the first direction.

### EFFECTS

The medium is attachable rotatably around a wrapped member without an additional force.

### BRIEF DESCRIPTION OF THE DRAWINGS

The objects, features, advantages, and technical and industrial significance of the present disclosure will be better understood by reading the following detailed description of the embodiment, when considered in connection with the accompanying drawings, in which:
Fig. 1 is a view for explaining a general structure of a label creating apparatus according to one embodiment;
Fig. 2A is a plan view illustrating a print tape before printing;
Fig. 2B is a plan view illustrating the print tape after printing;
Fig. 3A is a development plan view of a print label;
Fig. 3B is a cross-sectional view taken along line IIIB-IIIB in Fig. 2B;
Figs. 4A through 4C are views for explaining a procedure of attachment of the print label to a wrapped member;
Fig. 5 is a perspective view illustrating an example of use of the print labels;
Figs. 6A and 6B are schematic views each illustrating a state in which the print label is attached to a cable;
Fig. 7 is a development plan view of a print label in a modification in which a fourth region is short;
Fig. 8A is a plan view of a print label different in sticking manner in a modification;
Fig. 8B is a cross-sectional view taken along line VIIIB-VIIIB in Fig. 8A;
Figs. 9A and 9B are views for explaining a procedure of attachment of the print label to a wrapped member having a large diameter;
Figs. 10A and 10B are views for explaining a procedure of attachment of the print label to a wrapped member having a small diameter;
Fig. 11A is a plan view illustrating a print tape before printing in an example in which a continuous length tape is used;
Fig. 11B is a plan view illustrating the print tape after printing;
Fig. 12A is a development plan view of a print label in a modification with scales;
Fig. 12B is a cross-sectional view taken along line XIIB-XIIB in Fig. 12A;
Fig. 13A is a development plan view of a print label in a modification with marks;
Fig. 13B is a cross-sectional view taken along line XIIIB-XIIIB in Fig. 13A;
Fig. 14A is a development plan view of a print label in a modification in which marks are additionally provided on a central portion of the print label;
Fig. 14B is a cross-sectional view taken along line XIVB-XIVB in Fig. 14A;
Fig. 15A is a development plan view of a print label in a modification in which marks of different shapes are provided;
Fig. 15B is a cross-sectional view taken along line XVB-XVB in Fig. 15A; and
Fig. 16 is a view illustrating a table representing examples of shapes each formed by a first mark and a second mark overlapping each other after being stuck together.

### DETAILED DESCRIPTION OF THE EMBODIMENT

Hereinafter, there will be described one embodiment by reference to the drawings.

### Label Creating Apparatus

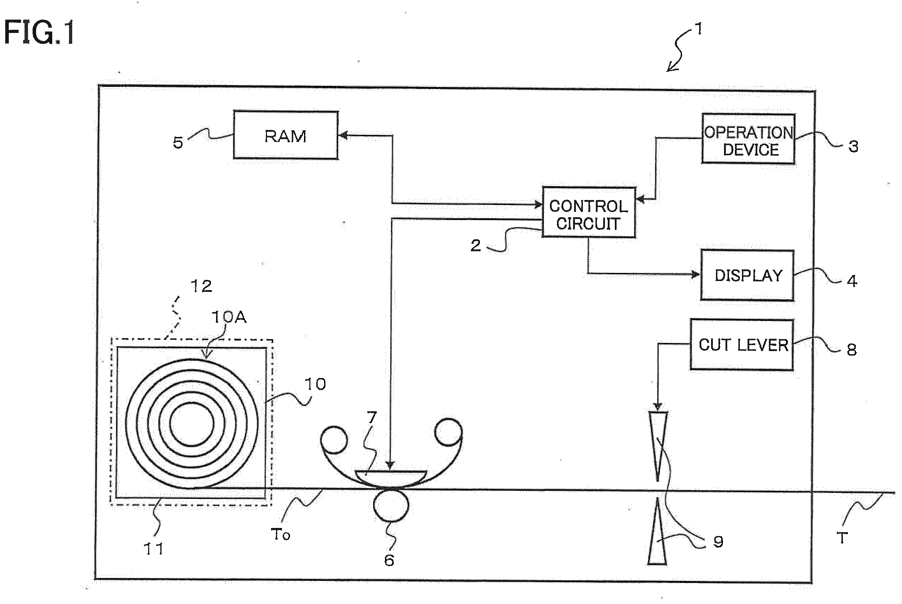

There will be described a label creating apparatus according to the present embodiment with reference to Fig. 1.

In Fig. 1, a label creating apparatus 1 as one example of a printing apparatus includes: a control circuit 2; an operation device 3 configured to accept operations of a user (an operator); a display 4; a random-access memory (RAM) 5 configured to store various kinds of information; a conveying roller 6; a print head 7; a cut lever 8; and cutters 9.

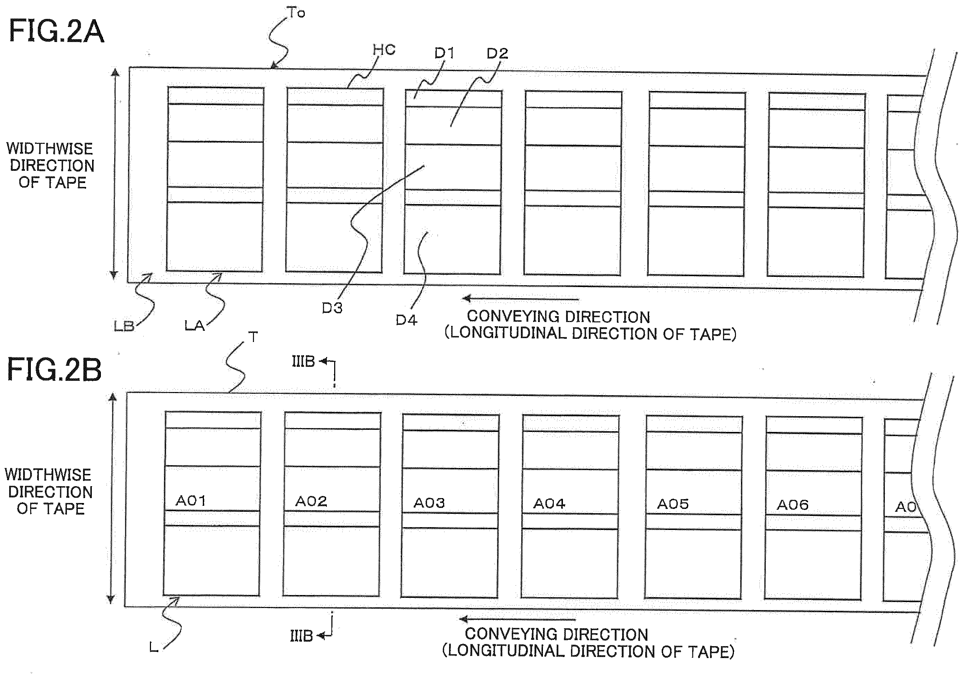

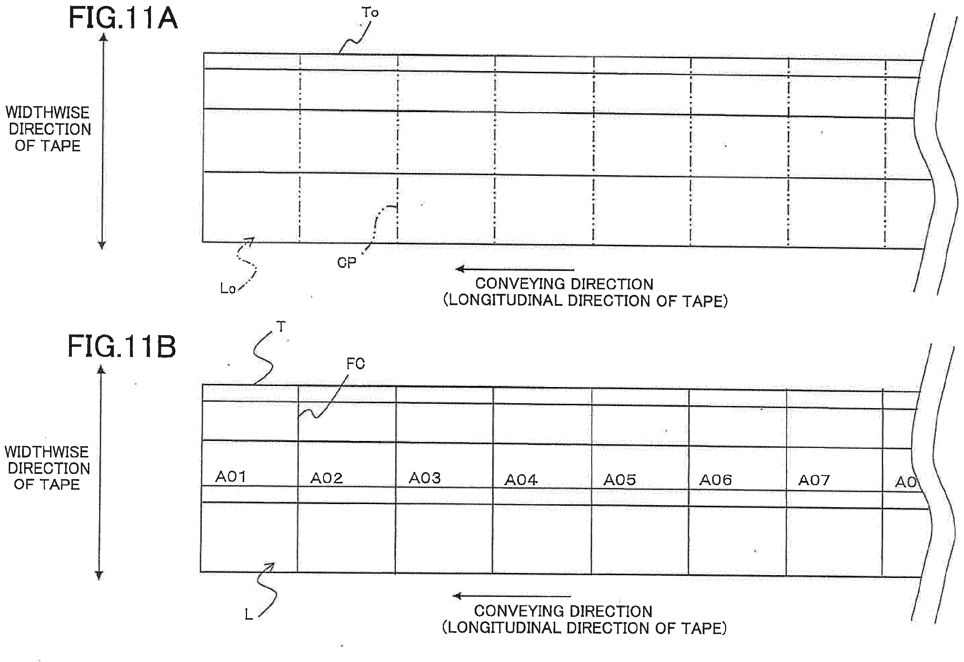

The label creating apparatus 1 includes a cartridge holder 12 having a housing 11, on which a tape cartridge 10 is mountable removably. The tape cartridge 10 accommodates a tape roll 10A having a spiral shape. It is noted that Fig. 1 illustrates the tape roll 10A in the form of concentric circles for simplicity. The tape roll 10A is a roll of a print tape To as one example of a tape. Examples of the tape cartridge 10 include: a tape cartridge of a die-cut-label type in which the print tape To having half-cut regions HC (see Figs. 2A and 2B which will be described below) formed by half cut (kiss cut) of the print tape To is rolled; and a tape cartridge of what is called a continuous type (see Figs. 11A and 11B which will be described below) in which the print tape To having no half-cut regions HC is rolled. In the label creating apparatus 1, any of the types of the tape cartridge 10 can be used. It is noted that the following explanation is provided assuming that the tape cartridge 10 of the die-cut-label type is used, unless otherwise specified.

The control circuit 2 includes a central processing unit (CPU) and a read-only memory (ROM), not illustrated. The control circuit 2 is configured to execute various programs stored in the ROM and control overall operations of the label creating apparatus 1 while using a temporary storage function of the RAM 5.

The conveying roller 6 is opposed to the print head 7. The print tape To fed from the tape roll 10A is nipped between the conveying roller 6 and the print head 7. The conveying roller 6 is rotated to convey the print tape To while drawing the print tape To out from the tape roll 10A.

The print head 7 is configured to print a desired print object, such as characters and figures, on each of label portions (which will be described later in detail) of the print tape To conveyed by the conveying roller 6.

The cutters 9 are actuated by user's operation of the cut lever 8 to cut a print tape T (which will be described later in detail) on which a plurality of print labels L are printed along a conveying direction. It is noted that each of the print tapes To, T is one example of a medium.

### Print Tape

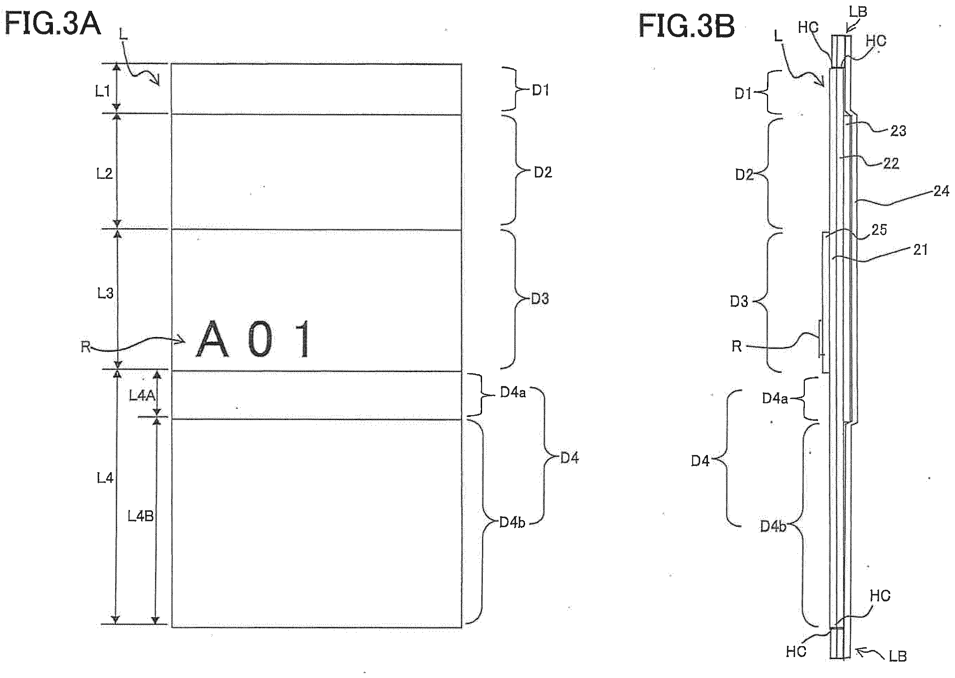

Fig. 2A illustrates the print tape To. Fig. 2A is a plan view of the print tape To in an unprinted state. In Fig. 2A, the right and left direction coincides with the conveying direction (in other words, the longitudinal direction of the tape), the up and down direction coincides with the widthwise direction of the tape, and the front and back direction of the sheet on which Fig. 2A is illustrated coincides with the thickness direction of the tape. In Fig. 2A, the print tape To has substantially rectangular half-cut regions HC (see Fig. 3B) formed by cutting a base layer 21 and an adhesive layer 22. Portions of the print tape To inside the half-cut regions HC are label portions LA, and a portion of the print tape To outside the half-cut regions HC is a non-label portion LB. It is noted that a print tape from which the non-label portion LB is peeled off in advance may be used as the print tape To. The label portions LA are arranged in the longitudinal direction of the tape. Each of the label portions LA includes an adhesive region D1, a non-adhesive region D2, a non-adhesive region D3, and a partly-adhesive region D4 arranged in order toward one side in the widthwise direction of the tape (downward in Fig. 2A). These regions will be described below.

Fig. 2B illustrates the print tape T on which character strings R are formed. In this example, Fig. 2B is a plan view of the print tape T after the character strings R are respectively printed on printing background layers 25 (which will be described below) in the non-adhesive region D3 of the regions D1-D4. In this example, as illustrated in Fig. 2B, text objects as the print objects, i.e., the character strings R ("A01", "A02", "A03", and so on) are formed in order by the print head 7 on the respective label portions LA to create the print labels L.

### Print Label

There will be next described the structure of the print label L with reference to Figs. 3A and 3B. Fig. 3A is plan view of one print label L separated from the non-label portion LB. Fig. 3B is a cross-sectional view taken along line IIIB-IIIB in Fig. 2B.

In Figs. 3A and 3B, each of the print labels L is constituted by the transparent base layer 21, the transparent adhesive layer 22, a transparent non-adhesive layer 23, and a separation layer 24 which are stacked on one another from the left side toward the right side in Fig. 3B (from the front side toward the back side in Fig. 3A) in a thickness direction of the print label L (i.e., the depth direction of the sheet in Fig. 3A and the right and left direction in Fig. 3B). The thickness direction is one example of a stacking direction in which the layers are stacked on one another. It is noted that since each of the print tapes To, T has this stacking structure, each of the print tapes To, T has the base layer 21, the adhesive layer 22, the non-adhesive layer 23, and the separation layer 24 each elongated in the right and left direction in Figs. 2A and 2B (as one example of a second direction orthogonal to each of a first direction and the thickness direction).

The printing background layer 25 having a non-transparent color on which the character string R is formed by the print head 7 is provided on a portion of a front surface of the base layer 21 (i.e., a left surface thereof in Fig. 3B which is a one-side surface thereof in the thickness direction). The non-adhesive layer 23 is provided between a portion of the adhesive layer 22 and a portion of the separation layer 24. While the adhesive layer 22 is provided on the entire back surface of the base layer 21 (i.e., a right surface in Fig. 3B which is an other-side surface thereof in the thickness direction) between the base layer 21 and the separation layer 24 in this example, the adhesive layer 22 may be provided on a portion of the back surface of the base layer 21.

In view of the above, the print label L has the four regions along the direction orthogonal to the thickness direction (i.e., the up and down direction in Figs. 3A and 3B, the circumferential direction of a wrapped member 302 which will be described below, and the first direction). The four regions include: the adhesive region D1 (as one example of a first region) constituting an upper end portion of the print label L in Figs. 3A and 3B in the first direction (noted that the upper side in Figs. 3A and 3B may be referred to as "the other side in the first direction"); the non-adhesive region D2 (as one example of a second region) located contiguous to and under the adhesive region D1 in Figs. 3A and 3B (noted that the lower side in Figs. 3A and 3B may be referred to as "one side in the first direction"); the non-adhesive region D3 (as one example of a third region) located contiguous to and under the non-adhesive region D2 in Figs. 3A and 3B; and the partly-adhesive region D4 (as one example of a fourth region) located contiguous to and under the non-adhesive region D3 in Figs. 3A and 3B.

In the adhesive region D1, the base layer 21, the adhesive layer 22, and the separation layer 24 are stacked in order from the one side toward the other side in the thickness direction (from the left side toward the right side in Fig. 3B). Thus, the entire portion of the adhesive region D1 which is in contact with the separation layer 24 has adhesiveness owing to the adhesive layer 22. The adhesiveness is one example of stickability in this specification. It is noted that the adhesive region D1 has a length L1 in the first direction. It is noted that a region in the print label L which is occupied by the adhesive region D1 extends in the first direction by the length L1 from an upper end of the print label L in the first direction, and is interposed in the second direction between opposite end portions of the base layer 21 in the second direction in the region extending from the upper end by the length L1.

In the non-adhesive region D2, the base layer 21, the adhesive layer 22, the non-adhesive layer 23, and the separation layer 24 are stacked in order from the one side toward the other side in the thickness direction (from the left side toward the right side in Fig. 3B). Thus, the entire portion of the non-adhesive region D2 which is in contact with the separation layer 24 is not adhesive (non-adhesiveness) because the adhesiveness of the adhesive layer 22 is interrupted by the non-adhesive layer 23. It is noted that the non-adhesiveness is one example of non-stickability in this specification. It is noted that the non-adhesive region D2 has a length L2 in the first direction. It is noted that a region in the print label L which is occupied by the non-adhesive region D2 extends in the first direction by the length L2 from a lower end of the adhesive region D1, and is interposed in the second direction between the opposite end portions of the base layer 21 in the second direction in the region extending from the lower end of the adhesive region D1 by the length L2.

In the non-adhesive region D3, the printing background layer 25, the base layer 21, the adhesive layer 22, the non-adhesive layer 23, and the separation layer 24 are stacked in order from the one side toward the other side in the thickness direction (from the left side toward the right side in Fig. 3B). Thus, the entire portion of the non-adhesive region D3 which is in contact with the separation layer 24 is not adhesive because the adhesiveness of the adhesive layer 22 is interrupted by the non-adhesive layer 23. In this example, the printing background layer (ink coated layer) 25 is formed by coating the base layer 21 with ink of an appropriate color, for example. The character string R (the text "A01") is formed by the print head 7 on the printing background layer 25. It is noted that the non-adhesive region D3 has a length L3 in the first direction. A region in the print label L which is occupied by the non-adhesive region D3 extends in the first direction by the length L3 from a lower end of the non-adhesive region D2, and is interposed in the second direction between the opposite end portions of the base layer 21 in the second direction in the region extending from the lower end of the non-adhesive region D2 by the length L3.

The partly-adhesive region D4 includes: a non-adhesive region D4a (as one example of a first-portion region) provided contiguous to and under the non-adhesive region D3 in Figs. 3A and 3B; and an adhesive region D4b (as one example of a second-portion region) provided contiguous to and under the non-adhesive region D4a in Figs. 3A and 3B and defines a lower end of the print label L in the first direction in Figs. 3A and 3B.

In the non-adhesive region D4a, the base layer 21, the adhesive layer 22, the non-adhesive layer 23, and the separation layer 24 are stacked in order from the one side toward the other side in the thickness direction (from the left side toward the right side in Fig. 3B). Thus, the entire portion of the non-adhesive region D4a which is in contact with the separation layer 24 is not adhesive because the adhesiveness of the adhesive layer 22 is interrupted by the non-adhesive layer 23. It is noted that the non-adhesive region D4a has a length L4A in the first direction. A region in the print label L which is occupied by the non-adhesive region D4a extends in the first direction by the length L4A from a lower end of the non-adhesive region D3, and is interposed in the second direction between the opposite end portions of the base layer 21 in the second direction in the region extending from the lower end of the non-adhesive region D3 by the length L4A.

In the adhesive region D4b, the base layer 21, the adhesive layer 22, and the separation layer 24 are stacked in order from the one side toward the other side in the thickness direction (from the left side toward the right side in Fig. 3B). Thus, at least a part of a portion of the adhesive region D4b, which portion is in contact with the separation layer 24, has adhesiveness owing to the adhesive layer 22. It is noted that the adhesive region D4b has a length L4B in the first direction. As a result, the partly-adhesive region D4 has a length L4 (= L4A + L4B) in the first direction, and at least a portion of the partly-adhesive region D4 is adhesive. A region in the print label L which is occupied by the adhesive region D4b extends in the first direction by the length L4B from a lower end of the non-adhesive region D4a, and is interposed in the second direction between the opposite end portions of the base layer 21 in the second direction in the region extending from the lower end of the non-adhesive region D4a by the length L4B.

It is noted that a well-known release processing (release treatment) is applied at least to a surface of the separation layer 24 which is in contact with the adhesive layer 22 in the adhesive region D1 and to a surface of the separation layer 24 which is in contact with the adhesive layer 22 in a portion of the partly-adhesive region D4 (e.g., the adhesive region D4b). As a result, when the separation layer 24 is peeled off, the adhesive layer 22 clings to the base layer 21 and is kept unseparated therefrom at least in the adhesive region D1 and the adhesive region D4b. The release processing may not be applied to the surface of the separation layer 24 which is in contact with the adhesive layer 22 in the adhesive region D1 but be applied to the surface of the base layer 21 which is in contact with the adhesive layer 22 in the adhesive region D1. With this structure, when the separation layer 24 is peeled off, the adhesive layer 22 does not remain on the base layer 21 in the adhesive region D1. In the region D4a, in this case, the base layer 21, the adhesive layer 22, and the separation layer 24 need to be stacked in order from the one side toward the other side in the thickness direction, and the release processing needs to be applied to the separation layer 24. Also, the base layer 21 does not have perforation or slits (except the half-cut regions HC), and the cross-sectional shape of the base layer 21 in the thickness direction is continuous in the first direction.

The length L2 of the non-adhesive region D2 in the first direction is less than the length L4 of the partly-adhesive region D4 in the first direction (L2 < L4). The length L1 of the adhesive region D1 in the first direction is less than or equal to the length L2 of the non-adhesive region D2 in the first direction (L1 ≤ L2). The length L1 of the adhesive region D1 in the first direction is equal to the length L4A of the non-adhesive region D4a in the first direction (L1 = L4A).

The sum of the length L2 of the non-adhesive region D2 in the first direction and the length L3 of the non-adhesive region D3 in the first direction is less than or equal to the length L4 of the partly-adhesive region D4 in the first direction (L2 + L3 ≤ L4). The length L4 of the partly-adhesive region D4 in the first direction is greater than or equal to the sum of the length L2 of the non-adhesive region D2 in the first direction and the length L3 of the non-adhesive region D3 in the first direction, and the length L4 is less than or equal to the sum of twice the length L2 of the non-adhesive region D2 in the first direction and the length L3 of the non-adhesive region D3 in the first direction (L2 + L3 ≤ L4 ≤ 2 × L2 + L3).

### Procedure of Attachment of Print Label to Wrapped Member

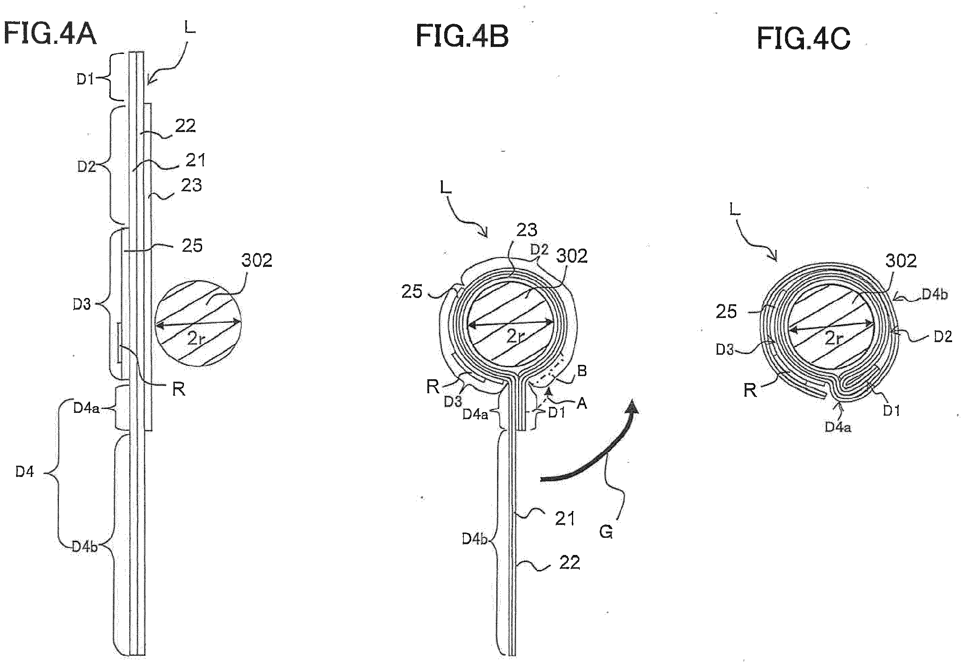

Figs. 4A-4C illustrate one example of a procedure of attachment of the print labels L to the wrapped member. In this example, Figs. 4A-4C illustrate one example of wrapping the print label L around the wrapped member 302 shaped like a circular cylinder or a cable and having a diameter 2r.

As illustrated in Fig. 4A, the separation layer 24 is first peeled off from the print label L having the above-described structure to expose the non-adhesive layer 23. While the print label L is constituted by the adhesive region D1, the non-adhesive region D2, the non-adhesive region D3, and the partly-adhesive region D4 arranged in this order, the portions of the print label L in the adhesive region D1, the non-adhesive region D2, and the non-adhesive region D3 are then bent in a concave shape such that a portion of the print label L which had been in contact with the separation layer 24 (a right portion of the print label L in Fig. 4A) is located on an inner side (not illustrated).

As illustrated in Fig. 4B, the wrapped member 302 is placed on an inner portion of the concave portion of the print label L, and the print label L is wrapped around the wrapped member 302 so as to form a cylindrical member surrounding the wrapped member 302. Then, the adhesive layer 22 in the adhesive region D1 as a part of a distal end portion of the print label L (noted that the adhesive layer 22 in the adhesive region D1 serves as a sticking portion in inner-sides sticking which will be described below) and the non-adhesive layer 23 in the non-adhesive region D4a of the partly-adhesive region D4 (which serves as a stuck portion in the inner-sides sticking which will be described below) are stuck together. This sticking may be hereinafter referred to as "inner-sides sticking". In this state, the sum of the lengths L2, L3, L4A of the non-adhesive layer 23 in the first direction is at least greater than or equal to the circumference of a circle 2πr of the wrapped member 302. As a result, the shape of the print label L is fixed by sticking of the portions of the adhesive layer 22, and the print label L is wrapped around the wrapped member 302 in the non-adhesive region D2 and the non-adhesive region D3 without adhesive, whereby the print label L is rotatably attached to the wrapped member 302.

Thereafter, the rest portion (the adhesive region D4b in this example) of the partly-adhesive region D4 which is not used for surrounding the wrapped member 302 is wrapped around an outer circumferential portion of the print label L in the non-adhesive region D2 and the non-adhesive region D3 (see Fig. 4C) so as to cover the non-adhesive region D2 and the non-adhesive region D3 constituting the cylindrical member in this order such that the stuck portions of the print label L in the adhesive region D1 and the non-adhesive region D4a are folded into an inner circumferential side as indicated by arrow G in Fig. 4B (such that the adhesive region D1 as the sticking portion is folded along arrow A and brought into contact with an area B in Fig. 4B). The portion of the print label L in the adhesive region D4b of the partly-adhesive region D4 is stuck to the outer circumferential portion of the print label L in the non-adhesive region D2 and the non-adhesive region D3 using adhesiveness of the adhesive layer 22, and the attachment of the print label L to the wrapped member 302 is finished.

### Example of Use of Print Label

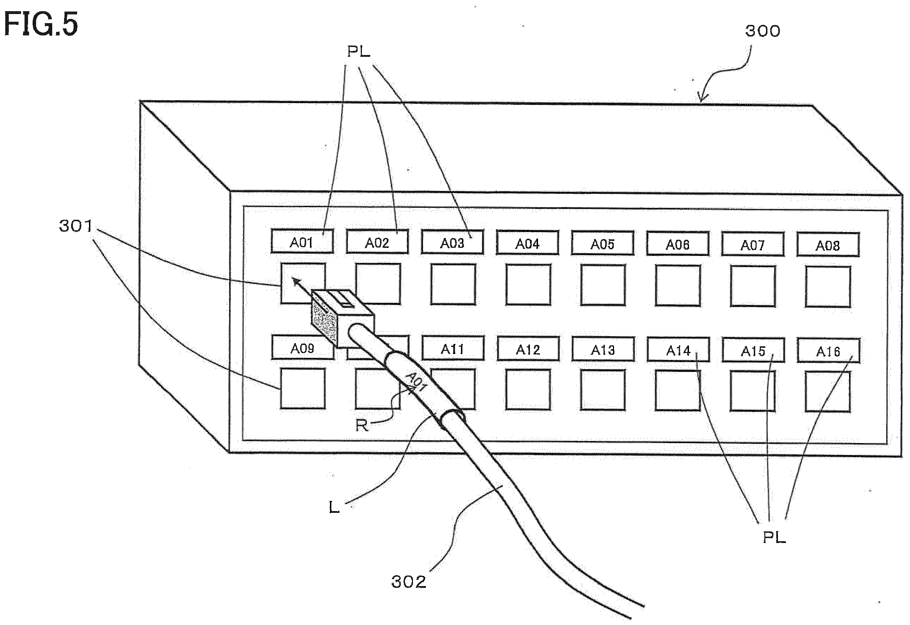

Fig. 5 illustrates one example of use of the print labels L. In this example, cables used for a switching hub configured to relay information over a wired LAN are used each as the wrapped member 302. These cables will be hereinafter referred to as "cables 302". As illustrated in Fig. 5, a switching hub 300 has sixteen slots 301, eight of which are formed in an upper portion of the switching hub 300, and the other eight of which are formed in a lower portion of the switching hub 300. In the illustrated example, plates PL indicating identification names "A01"-"A08" are provided respectively for the upper eight slots 301 so as to be arranged in this order from the left. Also, plates PL indicating identification names "A09"-"A16" are provided respectively for the lower eight slots 301 so as to be arranged in this order from the left.

Each of the cables 302 is connected to a corresponding one of the slots 301. For easy connection, the print labels L are attached to end portions of the respective cables 302 such that the same character strings R as the respective identification names of the slots 301 are printed on the respective print labels L to indicate the corresponding slots 301. That is, the print labels L on which the same texts as the identification names of the plates PL are printed are attached to the respective cables 302 to indicate which slot 31 each cable 302 is to be connected to. This configuration clarifies a relationship between the slots 301 and the cables 302, thereby preventing erroneous connection.

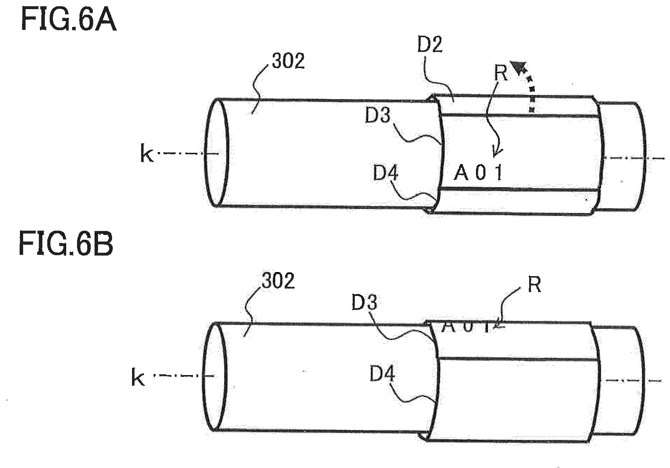

Each of Figs. 6A and 6B schematically illustrates a state in which the print label L is attached to the cable 302. Figs. 6A and 6B also illustrate axes k of the cables 302. As described above, the print label L is rotatably attached to the cable 302 as the wrapped member. In the state illustrated in Fig. 6A, for example, the print label L is in a state in which the non-adhesive region D3 in which the character string R representing "A01" is printed is on a front side in Fig. 6A. It is noted that the transparent adhesive region D4b covers the outer circumferential portion of the non-adhesive region D3 in reality as illustrated in Fig. 4C, but illustration of the transparent adhesive region D4b is omitted in Figs. 6A and 6B for simplicity. When the print label L is rotated in a direction indicated by the broken-line arrow (i.e., in the circumferential direction) from the state illustrated in Fig. 6A, for example, the partly-adhesive region D4 of the print label L is located on the front side as illustrated in Fig. 6B. In the case where the print label L is fixed to the cable 302 at the position in Fig. 6B, the viewability of the character string R is low. However, since the print label L is rotatable in this example, the viewability of the character string R is increased by rotating the print label L in a direction reverse to the above-described direction to the position in Fig. 6A.

### Effects

In the present embodiment as described above, the print label L is wrapped around the wrapped member 302 so as to form the cylindrical member surrounding the wrapped member 302. The portion of the adhesive layer 22 in the adhesive region D1 is then stuck by the inner-sides sticking to the portion of the non-adhesive layer 23 in the partly-adhesive region D4 (the non-adhesive region D4a in this example). The portion of the print label L in the partly-adhesive region D4 is then stuck to the outer circumferential portions of the print label L in the non-adhesive region D2 and the non-adhesive region D3 while covering the non-adhesive region D2 and the non-adhesive region D3, whereby the print label L is attached to the wrapped member 302 without adhesive therebetween.

During wrapping of the portion of the print label L in the partly-adhesive region D4, the portions of the print label L in the non-adhesive region D2 and the non-adhesive region D3 are covered with the portion of the print label L in the partly-adhesive region D4 in this order. In the present embodiment, as described above, the length L4 of the partly-adhesive region D4 is greater than the length L2 of the non-adhesive region D2. Thus, a portion of the print label L in at least a portion of the non-adhesive region D3 contiguous to the non-adhesive region D2 can be covered with the portion of the print label L in the partly-adhesive region D4 (see Fig. 4C). The printing background layer 25 is provided in the non-adhesive region D3, and an object such as a text is described on the printing background layer 25 as the character string R. Accordingly, the above-described structure enables the portion of the print label L in the partly-adhesive region D4 to cover at least a portion of the character string R formed on the portion of the print label L in the non-adhesive region D3, thereby reducing lowering of viewability of the character string R due to soiling, for example.

While the portion of the print label L in the partly-adhesive region D4 is being wrapped on the portions of the print label L in the non-adhesive region D2 and the non-adhesive region D3, the inner portion of the print label L in the partly-adhesive region D4 and the portion (including the adhesive region D1) of the print label L which is stuck to the inner portion are wrapped on the outer circumferential portions of the print label L in the non-adhesive region D2 and the non-adhesive region D3 in this order (see Fig. 4B). In the present embodiment, since the length L1 of the adhesive region D1 is less than or equal to the non-adhesive region D2, it is possible to prevent the portion of the print label L in the adhesive region D1 from covering not only the portion of the print label L in the non-adhesive region D2 but also the portion of the print label L in the non-adhesive region D3. Specifically, as illustrated in Fig. 4B, only the portion B is covered with the portion of the print label L in the adhesive region D1 which is folded back in the direction indicated by arrow A. Accordingly, it is possible to further reduce the lowering of viewability of the character string R in the non-adhesive region D3.

In the present embodiment as described above, the print label L is attached by the inner-sides sticking to the wrapped member 302 by sticking the portion of the adhesive layer 22 in the adhesive region D1 and the portion of the non-adhesive layer 23 in the non-adhesive region D4a to each other to form the cylindrical member around the wrapped member 302. Thus, an additional force such as a twisting of the wrapped member 302 is not applied to the print label L and the wrapped member 302 as in the conventional structure in which the print label L is wrapped around the wrapped member 302 and cut along the perforation. Furthermore, even after the print label L is attached to the wrapped member 302, it is possible to ensure good viewability of the character string R on the non-adhesive region D3.

In the present embodiment, in particular, the sum of the length L2 of the non-adhesive region D2 in the first direction and the length L3 of the non-adhesive region D3 in the first direction (L2 + L3) is less than or equal to the length L4 of the partly-adhesive region D4 in the first direction (L2 + L3 ≤ L4). Since the length L4 of the partly-adhesive region D4 is greater than or equal to the sum of the length of the non-adhesive region D2 and the length of the non-adhesive region D3 (L2 + L3), when the portion of the print label L in the partly-adhesive region D4 is wrapped on the portions of the print label L in the non-adhesive region D2 and the non-adhesive region D3 in this order as described above, the portion of the print label L in the partly-adhesive region D4 can cover the entire portion of the medium in the non-adhesive region D3 contiguous to the non-adhesive region D2 (see Fig. 4C).

In the present embodiment, in particular, the length L4 of the partly-adhesive region D4 in the first direction is greater than or equal to the sum of the length L2 of the non-adhesive region D2 in the first direction and the length L3 of the non-adhesive region D3 in the first direction (L2 + L3 ≤ L4) and is less than or equal to the sum of twice the length L2 of the non-adhesive region D2 in the first direction and the length L3 of the non-adhesive region D3 in the first direction (L4 ≤ (2 × L2 + L3)). Thus, after the portion of the print label L in the partly-adhesive region D4 covers the portions of the print label L in the non-adhesive region D2 and the non-adhesive region D3 as described above, the portion of the print label L in the partly-adhesive region D4 does not cover the portions of the print label L in the non-adhesive region D2 and the non-adhesive region D3 by wrapping these portions again (see Fig. 4C), resulting in reduction in lowering of the viewability.

In the present embodiment, in particular, the portion of the non-adhesive layer 23 in the non-adhesive region D4a is provided in the portion of the print label L in the partly-adhesive region D4, which portion is located near the non-adhesive region D3 and to be stuck to the portion of the adhesive layer 22 in the adhesive region D1. This configuration facilitates position correction in the above-described sticking (i.e., an operation of peeling the stuck print label L off and sticking the print label L again) when compared with the case where an adhesive layer is provided in the portion of the print label L in the non-adhesive region D4a.

### Modifications

While the embodiment has been described above, it is to be understood that the disclosure is not limited to the details of the illustrated embodiment, but may be embodied with various changes and modifications, which may occur to those skilled in the art, without departing from the spirit and scope of the disclosure. There will be described modifications of the above-described embodiment. It is noted that the same reference numerals as used in the above-described embodiment are used to designate the corresponding elements of the modifications, and an explanation of which is simplified or dispensed with.

### 1. Case Where Fourth Region is Short

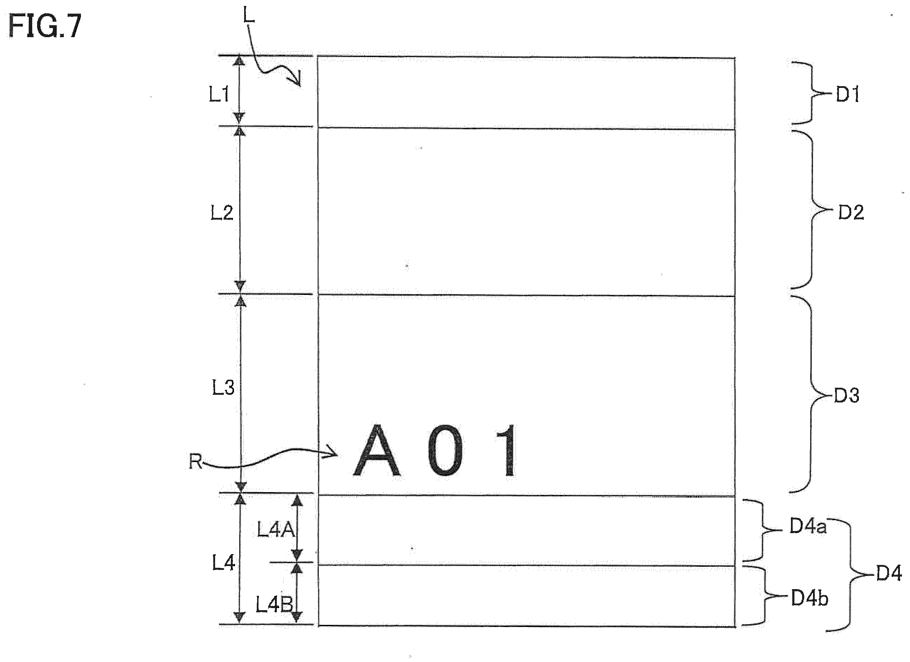

In a modification, as illustrated in Fig. 7, the fourth region of the print label L is short. In this case in Fig. 7, for example, the length L4 of the partly-adhesive region D4 in the first direction is greater than the length L1 of the adhesive region D1 in the first direction, and the length L2 of the non-adhesive region D2 in the first direction is greater than or equal to the length L4 of the partly-adhesive region D4 in the first direction (L1 < L4 ≤ L2). This structure prevents the portion of the print label L in the non-adhesive region D3 from being covered with the portion of the print label L in the partly-adhesive region D4 when the portion of the print label L in the partly-adhesive region D4 is wrapped as described above.

### 2. Case of Another Sticking Manner

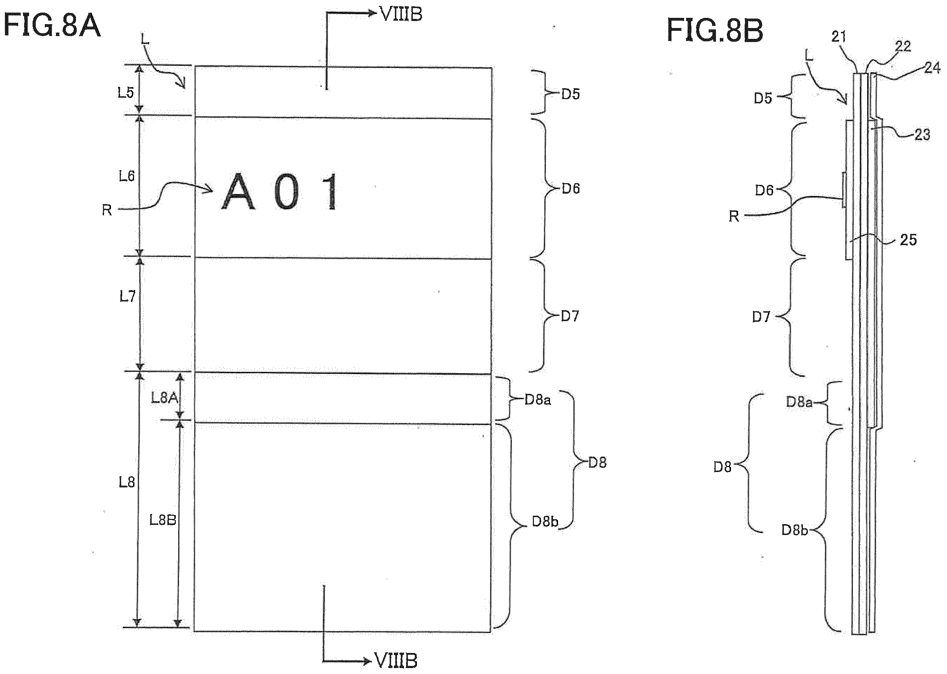

Fig. 8A is a plan view of a print label L to be stuck in another sticking manner. Fig. 8A corresponds to Fig. 3A. Fig. 8B is a cross-sectional view taken along line VIIIB-VIIIB in Fig. 8A. Fig. 8B generally corresponds to Fig. 3B.

In Figs. 8A and 8B, the print label L (in other words, the print tapes To, T) includes the transparent base layer 21, the transparent adhesive layer 22, the transparent non-adhesive layer 23, and the separation layer 24 which are stacked on one another in this order from the left side toward the right side in Fig. 8B along the thickness direction of the print label L.

As in the above-described embodiment, the printing background layer 25 is provided on a portion of the front surface of the base layer 21, and the non-adhesive layer 23 is provided between a portion of the adhesive layer 22 and a portion of the separation layer 24.

In view of the above, the print label L in this example has four regions along the first direction. The four regions include: an adhesive region D5 (as one example of a fifth region in this example) constituting an end portion of the print label L in the first direction; a non-adhesive region D6 (as one example of a sixth region in this example) provided contiguous to and under the adhesive region D5 in Figs. 8A and 8B; a non-adhesive region D7 (as one example of a seventh region in this example) provided contiguous to and under the non-adhesive region D6 in Figs. 8A and 8B; and a partly-adhesive region D8 (as one example of an eighth region in this example) provided contiguous to and under the non-adhesive region D7 in Figs. 8A and 8B.

In the adhesive region D5, as in the adhesive region D1, the base layer 21, the adhesive layer 22, and the separation layer 24 are stacked in order from the left side toward the right side in Fig. 8B. A portion of the adhesive region D5, which portion is in contact with the separation layer 24, has adhesiveness. It is noted that the adhesive region D5 has a length L5 in the first direction. It is noted that a region in the print label L which is occupied by the adhesive region D5 extends in the first direction by the length L5 from an upper end of the print label L in the first direction, and is interposed in the second direction between the opposite end portions of the base layer 21 in the second direction in the region extending from the upper end by the length L5.

In the non-adhesive region D6, as in the non-adhesive region D3, the printing background layer 25, the base layer 21, the adhesive layer 22, the non-adhesive layer 23, and the separation layer 24 are stacked in order from the one side toward the other side in the thickness direction (from the left side toward the right side in Fig. 8B). Thus, the entire portion of the non-adhesive region D6 which is in contact with the separation layer 24 is not adhesive because the adhesiveness of the adhesive layer 22 is interrupted by the non-adhesive layer 23. The printing background layer 25 is an ink coated layer. The character string R (the text "A01") is formed on the printing background layer 25. It is noted that the non-adhesive region D6 has a length L6 in the first direction. It is noted that a region in the print label L which is occupied by the non-adhesive region D6 extends in the first direction by the length L6 from a lower end of the adhesive region D5, and is interposed in the second direction between the opposite end portions of the base layer 21 in the second direction in the region extending from the lower end of the adhesive region D5 by the length L6.

In the non-adhesive region D7, as in the non-adhesive region D2, the base layer 21, the adhesive layer 22, the non-adhesive layer 23, and the separation layer 24 are stacked in order from the one side toward the other side in the thickness direction (from the left side toward the right side in Fig. 8B). Thus, the entire portion of the non-adhesive region D7 which is in contact with the separation layer 24 is not adhesive because the adhesiveness of the adhesive layer 22 is interrupted by the non-adhesive layer 23. It is noted that the non-adhesive region D7 has a length L7 in the first direction. It is noted that a region in the print label L which is occupied by the non-adhesive region D7 extends in the first direction by the length L7 from a lower end of the adhesive region D6, and is interposed in the second direction between the opposite end portions of the base layer 21 in the second direction in the region extending from the lower end of the adhesive region D6 by the length L7.

The partly-adhesive region D8 includes: a non-adhesive region D8a (as one example of a third-portion region in this example) provided contiguous to and under the non-adhesive region D7 in Figs. 8A and 8B; and an adhesive region D8b (as one example of a fourth-portion region in this example) provided contiguous to and under the non-adhesive region D8a in Figs. 8A and 8B and defines a lower end of the print label L in the first direction in Figs. 8A and 8B.

In the non-adhesive region D8a, as in the non-adhesive region D4a, the base layer 21, the adhesive layer 22, the non-adhesive layer 23, and the separation layer 24 are stacked in order from the one side toward the other side in the thickness direction (from the left side toward the right side in Fig. 8B). Thus, the entire portion of the non-adhesive region D8a which is in contact with the separation layer 24 is not adhesive because the adhesiveness of the adhesive layer 22 is interrupted by the non-adhesive layer 23. It is noted that the non-adhesive region D8a has a length L8A in the first direction. A region in the print label L which is occupied by the non-adhesive region D8a extends in the first direction by the length L8A from a lower end of the non-adhesive region D7, and is interposed in the second direction between the opposite end portions of the base layer 21 in the second direction in the region extending from the lower end of the non-adhesive region D7 by the length L8A.

In the adhesive region D8b, as in the adhesive region D4b, the base layer 21, the adhesive layer 22, and the separation layer 24 are stacked in order from the one side toward the other side in the thickness direction (from the left side toward the right side in Fig. 8B). Thus, at least a part of a portion of the adhesive region D8b, which portion is in contact with the separation layer 24 has adhesiveness owing to the adhesive layer 22. It is noted that the adhesive region D8b has a length L8B in the first direction. As a result, the partly-adhesive region D8 has a length L8 (= L8A + L8B) in the first direction, and at least a portion of the partly-adhesive region D8 is adhesive. A region in the print label L which is occupied by the adhesive region D8b extends in the first direction by the length L8B from a lower end of the non-adhesive region D8a, and is interposed in the second direction between the opposite end portions of the base layer 21 in the second direction in the region extending from the lower end of the non-adhesive region D8a by the length L8B.

It is noted that, as in the above-described embodiment, the well-known release processing is applied at least to a surface of the separation layer 24 which is in contact with the adhesive layer 22 in the adhesive region D5 and to a surface of the separation layer 24 which is in contact with the adhesive layer 22 in a portion of the partly-adhesive region D8 (e.g., the adhesive region D8b). As a result, when the separation layer 24 is peeled off, the adhesive layer 22 clings to the base layer 21 and is kept unseparated at least in the adhesive region D5 and the adhesive region D8b. The release processing may not be applied to the surface of the separation layer 24 which is in contact with the adhesive layer 22 in the adhesive region D5 but be applied to the surface of the base layer 21 which is in contact with the adhesive layer 22 in the adhesive region D5. With this structure, when the separation layer 24 is peeled off, the adhesive layer 22 does not remain on the base layer 21 in the adhesive region D5. In the region D8a, in this case, the base layer 21, the adhesive layer 22, and the separation layer 24 need to be stacked in order from the one side toward the other side in the thickness direction, and the release processing needs to be applied to the separation layer 24. Also, the base layer 21 does not have perforation or slits (except the half-cut regions HC), and the cross-sectional shape of the base layer 21 in the thickness direction is continuous in the first direction.

### Procedure of Attachment of Print Label to Wrapped Member

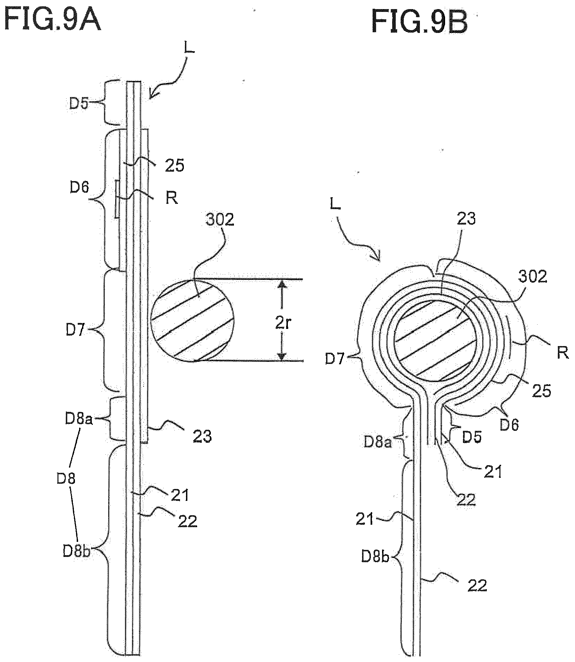

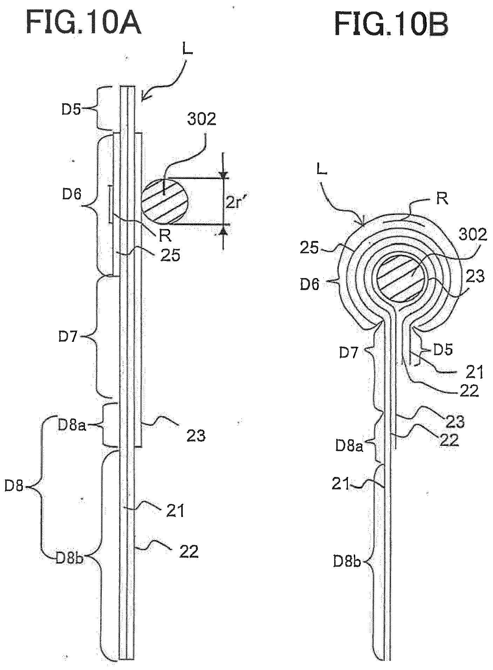

Figs. 9A-10B illustrate one example of a procedure of attachment of the print label L to the wrapped member. Figs. 9A and 9B illustrate a case of attaching the print label L to the wrapped member 302 having a relatively large diameter. Figs. 10A and 10B illustrate a case of attaching the print label L to the wrapped member 302 having a relatively small diameter. In this example, Figs. 9A and 10A illustrate one example of wrapping the print label L around the wrapped member 302 shaped like a circular cylinder or a cable and having a diameter 2r (or 2r').

As illustrated in Figs. 9A and 10A, the separation layer 24 is first peeled off from the print label L having the above-described structure to expose the non-adhesive layer 23. While the print label L is constituted by the adhesive region D5, the non-adhesive region D6, the non-adhesive region D7, and the partly-adhesive region D8 arranged in this order, the portions of the print label L in the adhesive region D5, the non-adhesive region D6, and the non-adhesive region D7 are then bent in a concave shape such that a portion of the print label L which had been in contact with the separation layer 24 (a right portion of the print label L in Figs. 9A and 10A) is located on an inner side (not illustrated).

As illustrated in Figs. 9B and 10B, the wrapped member 302 is placed on an inner portion of the concave portion of the print label L, and the print label L is wrapped around the wrapped member 302 so as to form a cylindrical member surrounding the wrapped member 302. Then, the adhesive layer 22 in the adhesive region D5 as a part of a distal end portion of the print label L (noted that the adhesive layer 22 in the adhesive region D5 serves as the sticking portion) is stuck to the non-adhesive layer 23 as the stuck portion in the non-adhesive region D8a of the partly-adhesive region D8 in the case illustrated in Fig. 9B and to the non-adhesive layer 23 as the stuck portion in the non-adhesive region D7 and the non-adhesive region D8a in the case illustrated in Fig. 10B (that is, the inner-sides sticking is performed). In this state, the sum of the lengths L6, L7, L8A of the non-adhesive layer 23 in the first direction is at least greater than or equal to the circumference of a circle 2πr, 2πr' of the wrapped member 302. As a result, the shape of the print label L is fixed by the sticking, and the print label L is wrapped around the wrapped member 302 without adhesive, whereby the print label L is rotatably attached to the wrapped member 302.

Thereafter, the rest portion (the adhesive region D8b in the example in Fig. 9B and the partly-adhesive region D8 in the example in Fig. 10B) of the partly-adhesive region D8 which is not used for surrounding the wrapped member 302 is wrapped around an outer circumferential portion of the print label L (not illustrated) so as to cover the cylindrical member such that the stuck portions of the print label L are folded into an inner circumferential side. The portion of the print label L in the adhesive region D8b of the partly-adhesive region D8 is stuck to the outer circumferential portion of the cylindrical member using adhesiveness of the adhesive layer 22, and the attachment of the print label L to the wrapped member 302 is finished.

In the present modification, as in the above-described embodiment, the print label L is attached to the wrapped member 302 by forming the cylindrical member around the wrapped member 302 with the inner-sides sticking. Thus, an additional force such as a twisting of the wrapped member 302 is not applied to the print label L and the wrapped member 302 as in the conventional structure in which the print label L is wrapped around the wrapped member 302 and cut along the perforation.

### 3. Case with Continuous Length Tape

Fig. 11A illustrates a structure of the print tape To of the continuous type in the present modification. As illustrated in Fig. 11A, the print tape To in this case does not have the half-cut regions HC as illustrated in Fig. 2A and is cut into a predetermined size by the cutters 9 in creation of the print label L. Thus, the print tape To does not have the non-label portion LB. The print tape To is divided into a plurality of label regions Lo (corresponding to the label portions LA in the above-described embodiment) by cut-planned lines CP along which the print tape To is to be cut by the cutters 9. The label regions Lo are continuous to one another in the longitudinal direction of the print tape To.

Fig. 11B is a plan view of the print tape T after the character strings R are printed on the respective label regions Lo. The character strings R representing "A01", "A02", "A03", and so on are formed in order respectively on the label regions Lo as in the structure illustrated in Fig. 2B, and the print tape T is cut by the cutters 9 along cutting lines FC (corresponding to the cut-planned lines CP) to create the print labels L. It is noted that Fig. 11B illustrates the print labels L in an unseparated state for easy understanding even though the print tape T has already been cut by the cutters 9.

### 4. Case with Scales

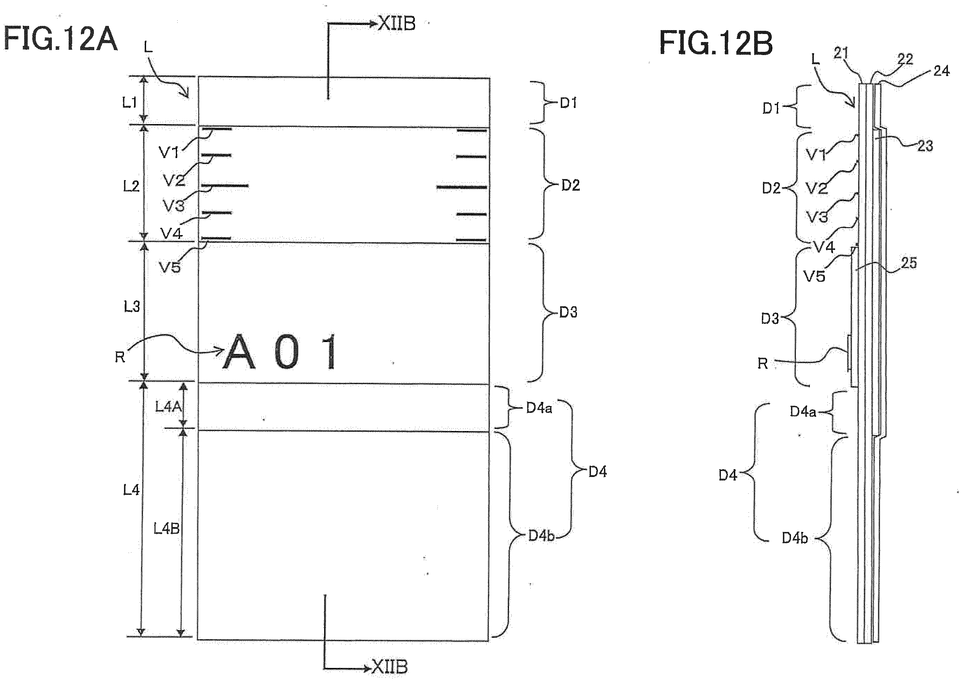

Fig. 12A is a development plan view of a print label L in the present modification. Fig. 12B is a cross-sectional view taken along line XIIB-XIIB in Fig. 12A. Fig. 12A corresponds to Figs. 3A and 8A, and Fig. 12B corresponds to Figs. 3B and 8B. In the present modification, as illustrated in Figs. 12A and 12B, five scales V1-V5 are provided on each of opposite side parts, in the widthwise direction, of the portion of the print label L in the non-adhesive region D2 (outside the printing background layer 25). The scales V1-V5 are spaced uniformly in the first direction. When the print label L is wrapped around the wrapped member 302 as described above, for example, the user can adjust a strength of wrapping the print label L as desired by adjusting a position at which the sticking portion and the stuck portion are stuck to each other while viewing the scales V1-V5. For example, the middle scale V3 among the scales V1-V5 corresponds to a sticking position at which a standard wrapping strength is obtained. Each of the scales V1, V2 corresponds to a sticking position at which a lower wrapping strength is obtained than at the middle scale V3. Each of the scales V4, V5 corresponds to a sticking position at which a higher wrapping strength is obtained than at the middle scale V3.

It is noted that at least one of the scales V1-V5 may be additionally provided on a portion of the base layer 21 in the partly-adhesive region D4 (e.g., the non-adhesive region D4a) or a portion of the base layer 21 in the non-adhesive region D3 so as to function as marks M1 and M2 in a modification described below.

### 5. Case with Marks

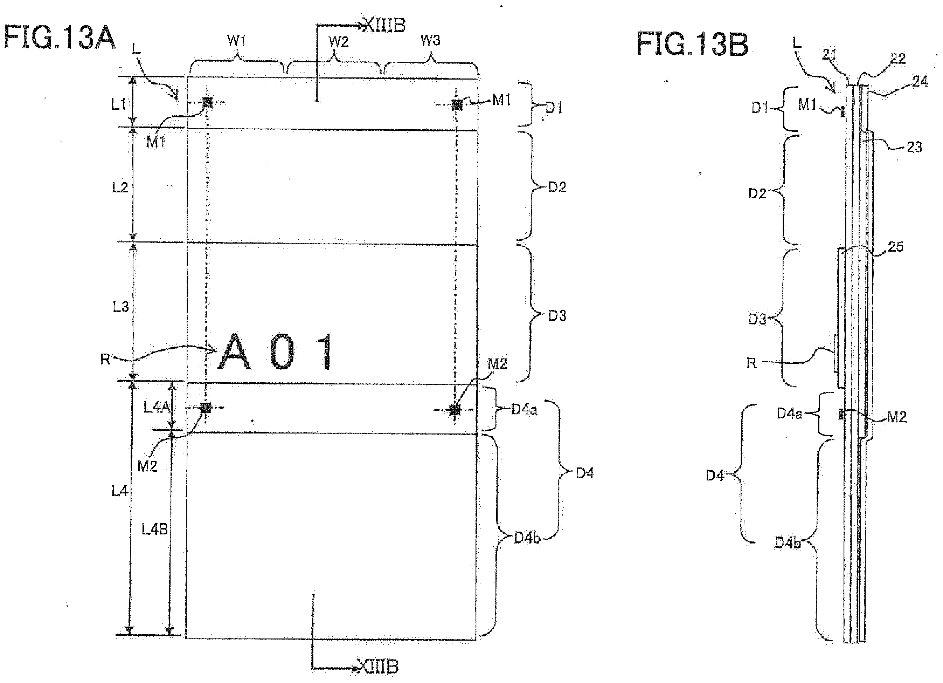

Fig. 13A is a development plan view of a print label L in the present modification. Fig. 13B is a cross-sectional view taken along line XIIIB-XIIIB in Fig. 13A. Fig. 13A corresponds to Figs. 3A and 8A, and Fig. 13B corresponds to Figs. 3B and 8B. Also in the present modification, as illustrated in Figs. 12A and 12B, the print label L has the four regions including: the adhesive region D1 (as another example of the first region); the non-adhesive region D2 (as another example of the second region) located contiguous to and under the adhesive region D1 in Figs. 13A and 13B; the non-adhesive region D3 (as another example of the third region) located contiguous to and under the non-adhesive region D2 in Figs. 13A and 13B; and the partly-adhesive region D4 (as another example of the fourth region) located contiguous to and under the non-adhesive region D3 in Figs. 13A and 13B. Also in the present modification, the partly-adhesive region D4 includes: the non-adhesive region D4a (as another example of the first-portion region) provided contiguous to and under the non-adhesive region D3 in Figs. 13A and 13B; and an adhesive region D4b (as another example of the second-portion region) provided contiguous to and under the non-adhesive region D4a in Figs. 13A and 13B and defines the lower end of the print label L in the first direction in Figs. 13A and 13B.

In the present modification, the two first marks M1 (each as one example of a first mark) are printed on a portion of the base layer 21 in the adhesive region D1 so as to be arranged in the right and left direction in Fig. 13A (i.e., the second direction), and the two second marks M2 (each as one example of a second mark) are printed on a portion of the base layer 21 in the partly-adhesive region D4 (specifically, the non-adhesive region D4a) so as to be arranged in the right and left direction in Fig. 13A (i.e., the second direction). Each of the first marks M1 and the second marks M2 is one example of a print mark.

In this modification, the first marks M1 and the second marks M2 are formed such that each of the two first marks M1 and a corresponding one of the two second marks M2 are arranged along the up and down direction in Fig. 13A (i.e., the first direction). Specifically, the center of left first mark M1 in Fig. 13A and the center of the left second mark M2 in Fig. 13A are arranged along the up and down direction in Fig. 13A (i.e., the first direction), and likewise the center of right first mark M1 in Fig. 13A and the center of the right second mark M2 in Fig. 13A are arranged along the up and down direction in Fig. 13A (i.e., the first direction). In this example, the first marks M1 and the second marks M2 have the same shape (square in this example).

As illustrated in Fig. 13A, assuming that the print label L is divided into three regions in the second direction, namely, a left end region W1, a central region W2, and a right end region W3, the marks M1, M2 are formed on opposite end portions of the print label L in the second direction, i.e., the left end region W1 and the right end region W3. That is, the first marks M1 are respectively printed on a portion of the print label L in the adhesive region D1 and the left end region W1 and on a portion of the print label L in the adhesive region D1 and the right end region W3. The second marks M2 are respectively printed on a portion of the print label L in the non-adhesive region D4a and the left end region W1 and on a portion of the print label L in the non-adhesive region D4a and the right end region W3.

In the present modification, the print label L is attached to the wrapped member 302 shaped like a cable or a circular cylinder, in the same manner as that in the above-described embodiment. That is, the print label L is wrapped around the wrapped member 302 so as to form a cylindrical member surrounding the wrapped member 302. The portion of the adhesive layer 22 in the adhesive region D1 is then stuck by the inner-sides sticking to the portion of the non-adhesive layer 23 in the partly-adhesive region D4 (the non-adhesive region D4a in this example). Since the first marks M1 are printed on the portion of the base layer 21 in the adhesive region D1, and the second marks M2 are printed on the portion of the base layer 21 in the partly-adhesive region D4, in the present modification, the portions of the print label L are stuck to each other such that each of the first marks M1 and a corresponding one of the second marks M2 coincide with each other. Accordingly, it is possible to prevent misalignment and skew of the print label L and stick the portions of the print label L to each other in a proper posture with easy positional alignment. Also, since the misalignment and skew are reduced during attachment, the print label L can be easily rotated around the wrapped member 302, thereby ensuring viewability from a desired angle. In particular, it is possible to prevent the adhesive from being exposed or lying off the print label L due to the misalignment and skew in the structure having the adhesive layer 22 as described above. This prevents the exposed adhesive from adhering to a hand of the user when the user handles the print label L and prevents the wrapped print label L from adhering to the wrapped member 302 due to the exposed adhesive, which may make it difficult for the wrapped print label L to rotate.

In the present modification, in particular, the marks M1, M2 are arranged on opposite end regions (i.e., the left end region W1 and the right end region W3). This arrangement prevents overlap of the marks M1, M2 with the character string R in the printing background layer 25 (specifically, at least a portion of the character string R which is located at a central portion of the printing background layer 25 in the second direction) when the print label L is wrapped on the wrapped member 302 (the wrapped member having a small outside diameter in particular), and an outer circumferential surface of the printing background layer 25 is covered with the portion of the print label L in the partly-adhesive region D4 (see Fig. 4C).

### 6. Case with Additional Marks on Central Portion

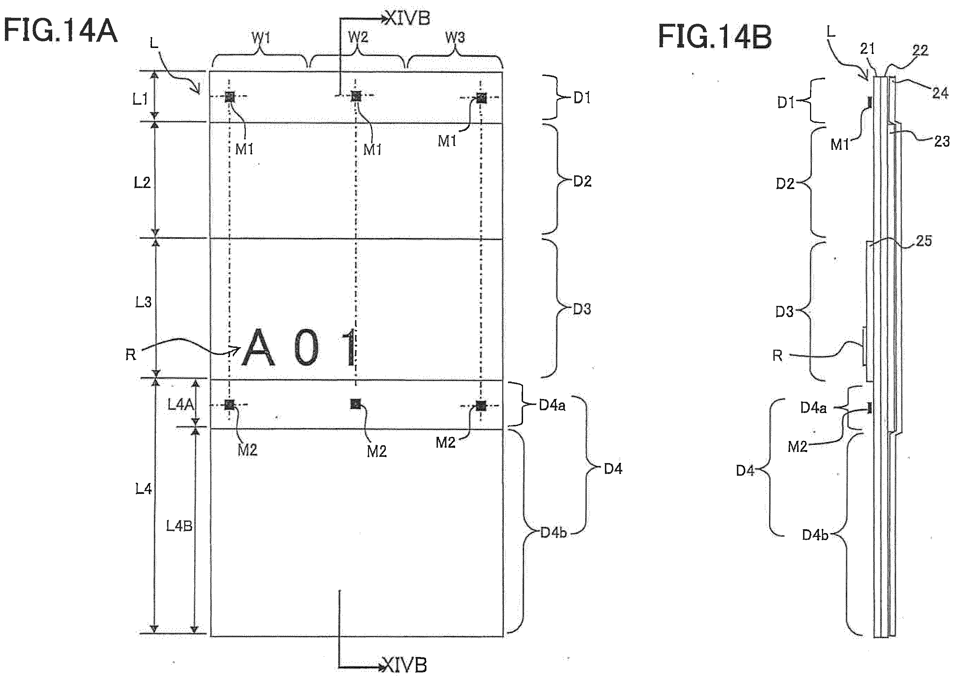

Fig. 14A is a development plan view of a print label L in the present modification. Fig. 14B is a cross-sectional view taken along line XIVB-XIVB in Fig. 14A. Fig. 14A corresponds to Figs. 3A and 8A, and Fig. 14B corresponds to Figs. 3B and 8B. In the present modification, as illustrated in Figs. 14A and 14B, the three marks M1 and the three marks M2 are printed. The additional marks M1, M2 are arranged in the central region W2. That is, in the case where it is assumed that the adhesive region D1 is divided into the three regions in the second direction, the first marks M1 are printed respectively in the left end region W1 in the adhesive region D1, the central region W2 in the adhesive region D1, and the right end region W3 in the adhesive region D1 such that a distance between the first mark M1 in the left end region W1 in the adhesive region D1 and the first mark M1 in the central region W2 in the adhesive region D1 is equal to a distance between the first mark M1 in the central region W2 in the adhesive region D1 and the first mark M1 in the right end region W3 in the adhesive region D1. Likewise, it is assumed that the non-adhesive region D4a is divided into the three regions in the second direction, the second marks M2 are printed respectively on the left end region W1 in the non-adhesive region D4a, the central region W2 in the non-adhesive region D4a, and the right end region W3 in the non-adhesive region D4a such that a distance between the second mark M2 in the left end region W1 in the non-adhesive region D4a and the second mark M2 in the central region W2 in the non-adhesive region D4a is equal to a distance between the second mark M2 in the central region W2 in the non-adhesive region D4a and the second mark M2 in the right end region W3 in the non-adhesive region D4a. As a result, even in the case of the print label L having a relatively large dimension in the second direction, the above-described positioning can be easily performed in the sticking.

### 7. Case with Marks of Different Shapes

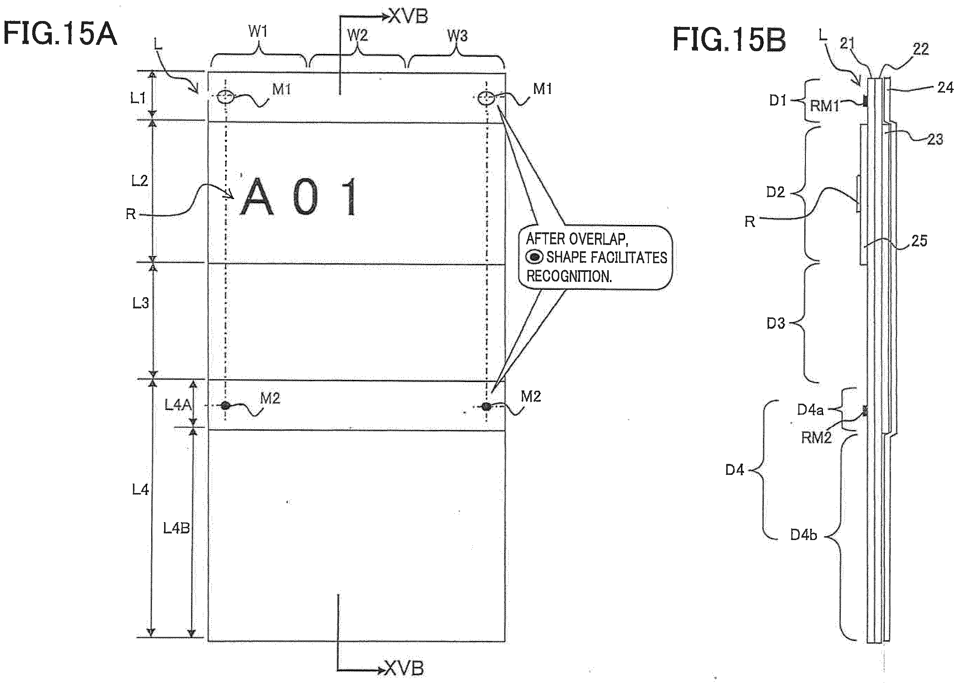

Each first mark M1 and each second mark M2 have the same shape in the above-described modifications but may have different shapes. Fig. 15A is a development plan view of a print label L in the present modification. Fig. 15B is a cross-sectional view taken along line XVB-XVB in Fig. 15A. Fig. 15A corresponds to Figs. 3A and 8A, and Fig. 15B corresponds to Figs. 3B and 8B. In the present modification, as illustrated in Figs. 15A and 15B, each of the first marks M1 is shaped like a small ring constituted by a white circle with a black border. Each of the second marks M2 is a solid black circle smaller than the border of the first mark M1. When the above-described sticking is performed so as to overlap the marks M1, M2 each other, the second mark M2 is disposed within the first mark M1 having the small-ring shape. This arrangement reduces misalignment and skew of the print label L and allows the user to easily recognize that the portions of the print label L are stuck to each other in a proper posture.

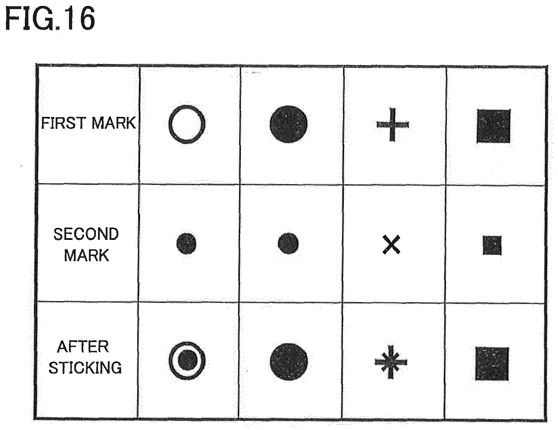

Fig. 16 illustrates examples of shapes after sticking of the first mark M1 and the second mark M2 having different shapes. In the case where the first mark M1 is a white circle with a black border, and the second mark M2 is a solid black circle smaller than the first mark M1, when the two marks M1, M2 overlap each other by the above-described sticking, the small black circle can be viewed within the white circle, making it easy for the user to recognize the overlapping state.

In the case where the first mark M1 is a solid black circle, and the second mark M2 is a solid black circle smaller than the first mark M1, when the two marks M1, M2 overlap each other by the above-described sticking, the small solid black circle is hidden by the large solid black circle, making it easy for the user to recognize the overlapping state (that is, overlapping is proper if the second mark M2 is not located off the first mark M1).

In the case where the first mark M1 is a cross, and the second mark M2 is a cross formed by rotating the first mark M1 by 45 degrees, when the two marks M1, M2 overlap each other by the above-described sticking, the two crosses form an asterisk with a lateral line, making it easy for the user to recognize the overlapping state.

In the case where the first mark M1 is a solid black square, and the second mark M2 is a solid black square smaller than the first mark M1, when the two marks M1, M2 overlap each other by the above-described sticking, the small solid black square is hidden by the large solid black square, making it easy for the user to recognize the overlapping state (that is, overlapping is proper if the second mark M2 is not located off the first mark M1).

In the present modification, as in the above-described modifications, it is possible to prevent misalignment and skew of the print label L and stick the portions of the print label L to each other in a proper posture.

### 8. Variations of Marks

It is noted that each of the first mark M1 and the second mark M2 is the print mark in the above-described modifications, but the present disclosure is not limited to this configuration. For example, one or both of the first mark M1 and the second mark M2 may be openings such as through holes or blind holes. In this case, the print mark may be smaller than the opening.

The marks M1, M2 and the printing background layer 25 may be of the same color. In this case, even in the case where the marks M1, M2 are located on the printing background layer 25 when the print label L is wrapped on the wrapped member 302, the marks M1, M2 are not conspicuous.

In Figs. 13A-15B, the marks M1, M2 are formed in the layout of the print label T illustrated in Figs. 3A and 3B. However, the present disclosure is not limited to this configuration. For example, the marks M1, M2 may be formed in the layout of the print label T illustrated in Figs. 8A and 8B. In this case, the first marks M1 are printed on a portion of the base layer 21 in the non-adhesive region D6 instead of the portion of the base layer 21 in the non-adhesive region D3. It is noted that the second marks M2 are printed on a portion of the base layer 21 in the partly-adhesive region D8 (specifically, the non-adhesive region D8a), which portion corresponds to the portion of the base layer 21 in the partly-adhesive region D4 (specifically, the non-adhesive region D4a). In this modification, the adhesive region D5 is another example of the fifth region. The non-adhesive region D6 is another example of the sixth region. The non-adhesive region D7 is another example of the seventh region. The partly-adhesive region D8 is another example of the eighth region. The non-adhesive region D8a is another example of the third-portion region. The adhesive region D8b is another example of the fourth-portion region.

In Figs. 13A-15B, the marks M1, M2 are printed on the print label L of the print tape To illustrated in Figs. 2A and 2B, but the present disclosure is not limited to this configuration. That is, the marks M1, M2 may be printed on the print label L of the print tape To illustrated in Figs. 11A and 11B. In this case, the first marks M1 are spaced uniformly in the longitudinal direction of the print tape To, and the second marks M2 are spaced uniformly in the longitudinal direction of the print tape To.

### 9. Other Modifications

In the above-described explanation, one example of the stickability is adhesion (adhesiveness) of the adhesive of the adhesive layer 22, but the present disclosure is not limited to this configuration. For example, the present disclosure may use various structures including: a pressure pseudo-adhesive structure which is used for, e.g., postcards and in which a pseudo-adhesive portion of the label cannot be stuck once peeled; and a structure in which portions of the label are stuck to each other by static electricity like a resin sheet used for, e.g., wrapping. For example, the pseudo-adhesive material may have such a property that the material is wet before sticking, and once dried and peeled, the material cannot be stuck again.

While boundaries each between corresponding two of the regions are substantially straight lines in the above-described embodiment and modifications, but the present disclosure is not limited to this configuration. For example, each boundary may be a zigzag line or shaped like a puzzle piece. In this case, the lengths of the regions in the first direction at least need to have the above-described relationship in at least one position in the second direction.

While the terms "the same", "equal", "different", and the like are used for dimensions and sizes in external appearance in the above-described explanation, these terms are not strictly used. That is, tolerance and error in design and manufacture are allowed, and "same", "equal", and "different" may be respectively interpreted as "substantially the same", "substantially equal", and "substantially different".

Each arrow in Fig. 1 indicates one example of a flow of signals and does not limit a direction or directions of the flow of the signals.

The techniques in the above-described embodiment and the modifications may be combined as needed.

The present disclosure is not limited to the details of the illustrated embodiment and modifications, but may be embodied with various changes and modifications, which may occur to those skilled in the art, without departing from the spirit and scope of the disclosure.

## Claims

1. A medium (To) comprising a transparent base layer (21) and a separation layer (24) stacked on each other in a stacking direction,
wherein a plurality of regions are defined in the medium (To) along a first direction orthogonal to the stacking direction,
wherein the plurality of regions comprise:
a first region (D1) in which a portion of the medium (To) which is in contact with the separation layer (24) is stickable;
a second region (D2) which is located on one side of the first region (D1) in the first direction and in which a portion of the medium (To) which is in contact with the separation layer (24) is non-stickable;
a third region (D3) which is located on the one side of the second region (D2) in the first direction, in which a printing background layer (25) is provided, and in which a portion of the medium (To) which is in contact with the separation layer (24) is non-stickable; and
a fourth region (D4) which is located on the one side of the third region (D3) in the first direction and in which a portion of the medium (To) which is in contact with the separation layer (24) is at least partly stickable, and
wherein a length of the second region (D2) in the first direction is less than a length of the fourth region (D4) in the first direction, and a length of the first region (D1) in the first direction is less than or equal to the length of the second region (D2) in the first direction in at least one position in a second direction orthogonal to each of the stacking direction and the first direction.

2. The medium (To) according to claim 1, wherein a sum of the length of the second region (D2) in the first direction and a length of the third region (D3) in the first direction is less than or equal to the length of the fourth region (D4) in the first direction.

3. The medium (To) according to claim 1, wherein the length of the fourth region (D4) in the first direction is greater than or equal to a sum of the length of the second region (D2) in the first direction and a length of the third region (D3) in the first direction and less than or equal to a sum of the length of the third region (D3) in the first direction and twice the length of the second region (D2) in the first direction.

4. The medium (To) according to any one of claims 1 through 3, wherein the fourth region (D4) comprises:
a first-portion region (D4a) which is non-stickable and which is contiguous to the third region (D3) on the one side of the third region (D3) in the first direction; and
a second-portion region (D4b) at least a portion of which is stickable and which is contiguous to the first-portion region (D4a) on the one side of the first-portion region (D4a) in the first direction.

5. The medium (To) according to claim 4, wherein the length of the first region (D1) in the first direction is equal to a length of the first-portion region (D4a) in the first direction.

6. The medium (To) according to claim 4 or 5,
wherein a portion of the transparent base layer (21) in the first region (D1) comprises a first mark (M1),
wherein a portion of the transparent base layer (21) in the first-portion region (D4a) comprises a second mark (M2), and
wherein the first mark (M1) and the second mark (M2) are aligned with each other in the first direction.

7. The medium (To) according to any one of claims 1 through 6, wherein a portion of the medium (To) in the first region (D1) comprises an end portion of the medium (To) in the first direction.

8. The medium (To) according to any one of claims 1 through 7, further comprising an adhesive layer (22) disposed in at least a portion of an area located between the transparent base layer (21) and the separation layer (24).

9. The medium (To) according to any one of claims 1 through 8, further comprising an adhesive layer (22) disposed in at least a portion of an area located between the transparent base layer (21) and the separation layer (24),
wherein a non-adhesive layer (23) is provided between the adhesive layer (22) and the separation layer (24) in at least one of the second region (D2), the third region (D3), and the fourth region (D4).

10. The medium (To) according to claim 8 or 9,
wherein a portion of the transparent base layer (21) in a portion of the fourth region (D4) has stickability provided by the adhesive layer (22), and
wherein a release treatment is applied to a surface of a portion of the separation layer (24) in the portion of the fourth region (D4).

11. The medium (To) according to any one of claims 8 through 10, wherein a release treatment is applied at least to a surface of a portion of the separation layer (24) in the first region (D1).

12. The medium (To) according to any one of claims 8 through 10, wherein a release treatment is applied at least to a surface of a portion of the transparent base layer (21) in the first region (D1).

13. The medium (To) according to any one of claims 8 through 12,
wherein the printing background layer (25) is provided on a one-side surface of the transparent base layer (21) in a thickness direction of the transparent base layer (21), and
wherein the adhesive layer (22) is provided on an other-side surface of the transparent base layer (21) in the thickness direction.

14. The medium (To) according to any one of claims 1 through 13, wherein the printing background layer (25) is an ink coated layer on the transparent base layer (21).

15. The medium (To) according to any one of claims 1 through 14, wherein a cross-sectional shape of an entirety of the transparent base layer (21) in a thickness direction thereof is continuous in the first direction.

16. The medium (To) according to any one of claims 1 through 15, wherein the medium (To) is elongated in the second direction.

17. A tape cartridge (10), comprising:
a housing (11); and
a tape roll (10A) that is a roll of a tape (To) contained in the housing (11) and comprising a transparent base layer (21) and a separation layer (24) stacked on each other in a stacking direction,
wherein a plurality of regions are defined in the tape (To) along a first direction orthogonal to the stacking direction,
wherein the plurality of regions comprise:
a first region (D1) in which a portion of the tape (To) which is in contact with the separation layer (24) is stickable;
a second region (D2) which is located on one side of the first region (D1) in the first direction and in which a portion of the tape (To) which is in contact with the separation layer (24) is non-stickable;
a third region (D3) which is located on the one side of the second region (D2) in the first direction, in which a printing background layer (25) is provided, and in which a portion of the tape (To) which is in contact with the separation layer (24) is non-stickable; and
a fourth region (D4) which is located on the one side of the third region (D3) in the first direction and in which a portion of the tape (To) which is in contact with the separation layer (24) is at least partly stickable, and
wherein a length of the second region (D2) in the first direction is less than a length of the fourth region (D4) in the first direction, and a length of the first region (D1) in the first direction is less than or equal to the length of the second region (D2) in the first direction in at least one position in a second direction orthogonal to each of the stacking direction and the first direction.

18. A medium (To) comprising a transparent base layer (21) and a separation layer (24) stacked on each other in a stacking direction,
wherein a plurality of regions are defined in the medium (To) along a first direction orthogonal to the stacking direction,
wherein the plurality of regions comprise:
a first region (D1) in which a portion of the medium (To) which is in contact with the separation layer (24) is stickable;
a second region (D2) which is located on one side of the first region (D1) in the first direction and in which a portion of the medium (To) which is in contact with the separation layer (24) is non-stickable;
a third region (D3) which is located on the one side of the second region (D2) in the first direction, in which a printing background layer (25) is provided, and in which a portion of the medium (To) which is in contact with the separation layer (24) is non-stickable; and
a fourth region (D4) which is located on the one side of the third region (D3) in the first direction and in which a portion of the medium (To) which is in contact with the separation layer (24) is at least partly stickable,
wherein the fourth region (D4) comprises:
a first-portion region (D4a) which is non-stickable and which is contiguous to the third region (D3) on the one side of the third region (D3) in the first direction; and
a second-portion region (D4b) at least a portion of which is stickable and which is contiguous to the first-portion region (D4a) on the one side of the first-portion region (D4a) in the first direction, and
wherein a length of the first region (D1) in the first direction is equal to a length of the first-portion region (D4a) in the first direction in at least one position in a second direction orthogonal to each of the stacking direction and the first direction.

19. The medium (To) according to claim 18, wherein a length of the fourth region (D4) in the first direction is greater than the length of the first region (D1) in the first direction, and a length of the second region (D2) in the first direction is greater than or equal to the length of the fourth region (D4) in the first direction in the at least one position in the second direction.

20. A medium (To) comprising a transparent base layer (21) and a separation layer (24) stacked on each other in a stacking direction,
wherein a plurality of regions are defined in the medium (To) along a first direction orthogonal to the stacking direction,
wherein the plurality of regions comprise:
a first region (D1) in which a portion of the medium (To) which is in contact with the separation layer (24) is stickable;
a second region (D2) which is located on one side of the first region (D1) in the first direction and in which a portion of the medium (To) which is in contact with the separation layer (24) is non-stickable;
a third region (D3) which is located on the one side of the second region (D2) in the first direction, in which a printing background layer (25) is provided, and in which a portion of the medium (To) which is in contact with the separation layer (24) is non-stickable; and
a fourth region (D4) which is located on the one side of the third region (D3) in the first direction and in which a portion of the medium (To) which is in contact with the separation layer (24) is at least partly stickable, and
wherein a cross-sectional shape of an entirety of the transparent base layer (21) in a thickness direction thereof is continuous in the first direction.

21. The medium (To) according to claim 20, wherein a length of the fourth region (D4) in the first direction is greater than a length of the first region (D1) in the first direction, and a length of the second region (D2) in the first direction is greater than or equal to the length of the fourth region (D4) in the first direction in at least one position in a second direction orthogonal to each of the stacking direction and the first direction.

22. A medium (To) comprising a transparent base layer (21) and a separation layer (24) stacked on each other in a stacking direction,
wherein a plurality of regions are defined in the medium (To) along a first direction orthogonal to the stacking direction,
wherein the plurality of regions comprise:
a fifth region (D5) in which a portion of the medium (To) which is in contact with the separation layer (24) is stickable;
a sixth region (D6) which is located on one side of the fifth region (D5) in the first direction and in which a portion of the medium (To) which is in contact with the separation layer (24) is non-stickable;
a seventh region (D7) which is located on the one side of the sixth region (D6) in the first direction and in which a portion of the medium (To) which is in contact with the separation layer (24) is non-stickable; and
an eighth region (D8) which is located on the one side of the seventh region (D7) in the first direction and in which a portion of the medium (To) which is in contact with the separation layer (24) is at least partly stickable, and
wherein a cross-sectional shape of an entirety of the transparent base layer (21) in a thickness direction thereof is continuous in the first direction.
